# EUROPEAN PATENT APPLICATION

(11) **EP 2 617 295 A1**
(43) Date of publication of application: **24.07.2013**
(21) Application number: 11825110.7
(22) Date of filing: 12.09.2011
(51) Int. Cl.: A23L 1/212, A23L 2/02, C12G 3/04

(54) **METHOD FOR PROCESSING MANGO JUICE**

(30) Priority: 13.09.2010 JP 2010204927
(71) Applicant: Suntory Holdings Limited, Kita-ku Osaka-shi Osaka 530-8203 (JP)
(72) Inventor: SAITO, Taku, Kawasaki-shi Kanagawa 211-0067 (JP); TAKATA, Kiyofumi, Kawasaki-shi Kanagawa 211-0067 (JP)
(74) Representative: Vossius & Partner
(86) International application number: PCT/JP2011/070688
(87) International publication number: WO 2012/036108

(57) **Abstract**

It is necessary to develop a method for obtaining mango juice having a rich flavor and maintaining its characteristic cloudy appearance and yet that is protected against precipitation during prolonged storage, irrespective of whether it is in the form of processed mango juice or a beverage that incorporates the same.

There is provided a process for producing processed mango juice having a reduced pulp content comprising the steps of treating, with an enzymatic agent, mango juice that has a turbidity of at least 3,700 upon centrifugal separation with a centrifugal effect of 1,200 (x G) for 10 minutes, and depulping the enzymatically treated mango juice to yield processed mango juice having a pulp content of no more than 20% (v/v) and a turbidity of at least 1,400 NTU.

## Description

### TECHNICAL FIELD

The present invention relates to mango-juice containing beverages. More specifically, the present invention relates to processing for preventing the occurrence of precipitation in mango-juice containing beverages while maintaining their cloudy appearance.

### BACKGROUND ART

Mango is used for human consumption either as fresh ripe fruit to be eaten or as juice from which various kinds of beverage are to be prepared. In contrast with grape and other fruit juice-containing beverages that present a comparatively transparent appearance, beverages that use the mango are cloudy and dark yellow orange in color, often having high viscosity, so they are reminiscent of the soft texture and mellowness of the mango flesh.

Generally speaking, fruit juice itself is a cloudy material that consists of both a water-soluble component and a water-insoluble component; the insoluble component is composed of fibrous matter, proteins, pectins, gummy matter, etc. and provides a mild taste and richness that are characteristic of natural fruit juices, playing an important role in the flavor of fruit juice- containing beverages. However, the insoluble component settles in fruit juice-containing beverages and tends to form a precipitate over time, occasionally reducing the commercial value of the beverages. The occurrence of precipitation may be prevented as by using non-cloudy (clarified) fruit juice or depulped fruit juice but then the outstanding flavor inherent in the fruit juice is usually impaired during the depulping process. In comparison, the mango juice is unique because if subjected to a certain depulping process, it still has a cloudy appearance but it is protected against precipitation and the outstanding flavor substances inherent in the fruit juice are adequately retained. As an application of this characteristic feature of the mango, Patent Document 1 discloses processed mango juice having a reduced content of mango juice pulp, wherein the pulp content is no greater than 20% by volume in terms of the concentration in a freshly squeezed state on the basis of the sugar content, and wherein the turbidity is at least 2,000 NTU.

To clarify apple, grape and other fruit juices, pectinase is sometimes employed. Fruit juice usually contains water-soluble pectins in large quantities. The pectins in fruit juice have sufficiently high molecular weights to impart viscosity to the fruit juice and ensure that the cloudiness particles in the latter are retained in a stable colloidal system. Thus, for the reason that the high-molecular weight pectins in the fruit juice must be decomposed to achieve clarification, pectinase has been employed. For example, Patent Document 2 discloses a process for producing semi-transparent fruit juice through clarification in the presence of an enzyme added to pressed fruit juice, wherein adjustment is made in such a way that the turbidity after the clarification is 0.03-0.50 in terms of absorbance as measured with a 10-mm cell at a wavelength of light in the range of 600-800 nm. The enzyme that can be used here is selected from among pectin decomposing enzymes, cellulose decomposing enzymes, starch decomposing enzymes, protein decomposing enzymes, and mixed enzymes consisting of these enzymes in various combinations. Patent Document 3 may be given as an example of the case where pectinase is used to reduce the viscosity of fruit juices. This document discloses a process for producing a viscous processed guava food that is mainly composed of guava fruit and has a Brix value of at least 25, comprising the steps of providing concentrated guava juice, hydrolyzing the concentrated guava juice using at least one hydrolytic enzyme selected from cellulase and pectinase, adding a seasoning, and heating the mixture until it has a Brix value of at least 25.

### CITATION LIST

### PATENT LITERATURE

Patent Document 1: Japanese Patent No. 4132691
Patent Document 2: Japanese Patent No. 2649587
Patent Document 3: JP 2004-173559 A

### SUMMARY OF INVENTION

### TECHNICAL PROBLEM

According to the study of the present inventors, depulping by centrifugal separation as performed on the basis of the disclosure of Patent Document 1 was adequately effective when the species Alphonso as one of the common cultivars of mango was used as the starting material but when the species Magdalena River was used as the starting material, precipitation sometimes occurred during storage of the depulped product or the beverage that used it.

It has, therefore, been necessary to develop a method for obtaining mango juice of a rich flavor that maintains the cloudy appearance inherent in mango juice and which yet is protected against precipitation during prolonged storage, irrespective of whether it is in the form of processed mango juice or a beverage that incorporates the same.

### SOLUTION TO PROBLEM

The present invention provides the following:
1. A process for producing processed mango juice having a reduced pulp content comprising the steps of:
   treating, with an enzymatic agent, mango juice that has a turbidity of at least 3,700 upon centrifugal separation with a centrifugal effect of 1,200 (x G) for 10 minutes; and
   depulping the enzymatically treated mango juice to yield processed mango juice having a pulp content of no more than 20% (v/v) and a turbidity of at least 1,400 NTU.
2. A process for producing processed mango juice having a reduced pulp content comprising the steps of:
   treating, with pectinase, mango juice obtained from mango fruit selected from among the species Haden, Tomy Atkins, Torbet, and Magdalena River, the pectinase treatment being such that an enzymatic agent containing pectinase is used at a pH of 3.0-6.0 and 30-60°C for 15-30 minutes to give a pectinase activity of 2.4-7.5 units per 100 mL of the mango juice; and
   depulping the pectinase-treated mango juice to yield processed mango juice having a pulp content of no more than 20% (v/v) and a turbidity of at least 1400 NTU.
3. The process as recited in 2, wherein the enzymatic agent has a cellulase activity value which is no more than 60 times its pectinase activity value (units/mL) as the reference.
4. The process as recited in any one of 1 to 3, wherein the depulping step is performed by centrifugal separation.
5. The process as recited in 4, wherein the centrifugal effect as achieved by centrifugal separation is 20,000-500 (x G).
6. A process for producing a beverage containing processed mango juice, which comprises the steps of:
   obtaining the processed mango juice as defined in any one of 1 to 5; and
   adding the obtained processed mango juice.
7. The process as recited in 6, wherein the processed mango juice is added in an amount which is 0.1-99.9% as calculated for the concentration in a freshly squeezed state.
8. The process as recited in 6 or 7, wherein the beverage is an alcoholic beverage.
9. The process as recited in 6 or 7, wherein the beverage is a non-alcoholic beverage.

### DESCRIPTION OF EMBODIMENTS

The present invention provides a process for producing processed mango juice having a reduced pulp content, which comprises an enzymatic treatment step and a depulping step.

### Mango as the starting material:

The mango *(Mangifera indica)* is a tropical plant belonging to the family *Anacardiaceae,* and its fruit is edible. Mango fruit is available in more than 600 cultivars (hereinafter sometimes referred to simply as "varieties"), which have their own inherent features. For example, Keitt which has good palatability and is prolific and Tomy Atkins which is somewhat less palatable but keeps long are two principal varieties; other varieties that are worth particular mention include good smelling Irwin which is a principal variety in Japan and Taiwan (where it is known by the popular name "apple mango"), Kent which is of less keeping quality but tastes good, Alphonso which is an especially common mid- to late-season variety in India, Green (California), Zill, Kinkou, Aikou, Manila, Haden, Nam Doc Mai, and Magdalena River.

The term "mango fruit" as used herein refers, unless otherwise noted, to mango fruit that is ripe enough to be suitable for use as the starting material for making beverages. Organically grown mango fruit is preferred. Mango fruit varieties that are relatively abundant in fibrous matter are advantageously used in the present invention. Specific examples include Haden, Tomy Atkins, Torbet, and Magdalena River. Haden is a principal variety in Hawaii that has strong smell and good palatability; Torbet is an early-season variety in Florida; and Magdalena River is a variety famous for its rich flavor which is grown in almost all areas of Columbia including the Magdalena River watershed.

For the purposes of the present invention, the origin of mango fruit is not particularly limited and the mango fruit from all mango producing countries in the world including India, Taiwan, Thailand, and Mexico may advantageously be used.
"Mango juice" according to the present invention refers to the liquid juice squeezed from the aforementioned mango fruit. The mango juice includes both mango puree (juice obtained by crushing mango fruit and straining it) and fermented mango juice.

In the present invention, mango puree is preferably used as mango juice. While there is no particular limitation on the method of making mango puree, it can typically be made by subjecting ripe sorted mango fruit to the steps of washing, heating, and straining with a pulper and/or finisher.

The present invention is suitable for use in the case where mango that is particularly abundant in the insoluble solids content is used as the starting material, for example, in the case where mango, if depulped by the method of Patent Document 1, will form an observable precipitate. More specifically, such mango juice, if centrifuged at 1,200 (x G) for 10 minutes, filled into a transparent container, and held in a thermostatic water tank at 20°C for 30 minutes, will form a visible precipitate on the bottom of the container and/or will give a turbidity of at least 3,600 NTU, preferably at least 3,700 NTU, and more preferably at least 4,000 NTU.

The term "pulp" as used herein refers, unless otherwise noted, to the insoluble component that is contained in fruit juice which can be defined as "the insoluble solids" in the Japan Agricultural Standards Test. The content of the pulp or the pulp content is calculated by the following method specified in the Japan Agricultural Standards Test: a sample is placed in a centrifugal sedimentation tube which is set in a centrifugal separator having a rotation radius of 14.5 cm; after centrifuging the sample at 20°C and 3,000 rpm for 10 minutes, the volume percent of the precipitate is read with an insoluble solids measuring centrifugal precipitation tube (graduated); and the volume reading is represented as a percentage with respect to the total volume of the sample ("saishin kajyu/kajitsu inryo jiten (Revised Dictionary of Fruit Juice and Fruit Beverages)"), Japan Fruit Juice Association, first edition, first printing, October 1, 1997, p. 574,)

The term "turbidity" as used herein refers, unless otherwise noted, to the turbidity measured with a turbidimeter Model 2100AN manufactured by HACH Co. (turbidity unit: NTU; dynamic range: 0-10,000 NTU). This method enables detection of not only 90° scattered light but also forward scattered and backscattered light, as well as transmitted light, so it is suitable for measuring the turbidity of highly colored samples such as mango juice.

To evaluate the cloudy state (cloudiness) and precipitation that occur in two embodiments of the present invention, i.e., processed mango juice and beverages (including alcoholic beverages) that incorporate the same, the respective samples are subjected to forced deterioration conditions (specifically, storage in a 50°C thermostatic vessel) and the resulting change in their appearance is checked by visual inspection, unless otherwise noted.

### Enzymatic treatment step:

In the present invention, mango juice is subjected to an enzymatic treatment with an enzymatic agent. The "enzymatic agent" as referred to herein may contain an additive such as an excipient in addition to the enzyme or enzymes as the main ingredient. The enzymatic agent that can be used in the step of enzymatic treatment in the present invention contains at least pectinase as the main ingredient enzyme.

Pectinase is an enzyme that decomposes pectins. Pectins are sometimes referred to as a pectic substance or pectic polysaccharidies. Pectins are mainly composed of acidic polysaccharides having a backbone chain consisting of α-1,4 linked D-galacturonic acid units interspersed with α-1,2 linked rhamnose units, and side chains abundant in neutral sugars such as arabinose and galactose. Most of the side chains are bound to 4-position of rhamnose but they are also bound to some of the galacturonic acid units. Some of the carboxyl groups of galacturonic acid units have been esterified with methanol.

Pectinase is largely divided into two types depending on whether it degrades the main chain or the methyl ester bond, and the former type further comprises polygalacturonase, pectinliase, pectinesterase (which hydrolyzes the methyl ester bond in pectins), pectin methylesterase, etc., depending on the specificity for substrate (whether it acts on pectin that has been esterified with methanol or on pectinic acid having a free carboxyl group) or on the degradation pattern (whether it is of the endo- or exo-degradation).

Pectinases that can advantageously be used in the present invention include endopolygalacturonase (hereinafter sometimes designated as Endo-PGase) which is effective for lowering the viscosity.
Various pectinase-containing enzymatic agents can be used in the present invention and particularly preferred examples are enzymes having a pectinase activity (sometimes designated as Endo-PGase power) of 1,200 units/mL and more. Pectinase activity can be measured in accordance with the Third Edition of Voluntary Standards on Existing Additives (November 1, 2002), Section (12) Method 3 for Measuring Pectinase Activity (Pectin Viscosity Dropping Power Measurement Method-2). To determine enzymatic activity by this method, pectinase is allowed to act on a solution of the substrate lemon pectin, whereupon the viscosity of the pectin solution drops on account of the pectin degradation and the resulting drop in viscosity is measured.

From the viewpoint of performing the enzymatic treatment to the desired extent, the enzymatic agent to be used in the present invention preferably has no or only low-level activity of enzymes such as cellulase that can decompose the pulp. Specifically, the activity to decompose the pulp is no higher than 60 times, preferably no higher than 45 times, and more preferably no higher than 33 times, the value of pectinase activity as the reference. Higher values of cellulase activity are not preferred because the cloudiness of mango juice is likely to disappear. A cellulase activity that is no more than 60 times the value of pectinase activity is equivalent to no more than 90,000 units/mL of cellulase activity in an enzymatic agent having a pectinase activity of 1,500 units/mL.

The enzymatic agent may be substantially free of cellulase activity or it may have a cellulase activity of no more than 1,000 u/ml. Cellulase activity (which is sometimes referred to as "fiber digestive power") can be measured in accordance with the Third Edition of Voluntary Standards on Existing Additives, supra, Section (7) Method 2 for Measuring Cellulase Activity (Cellulose Saccharifying Power Measurement Method-Copper Reagent Method). This method consists of two stages, one being an enzymatic reaction for causing the enzyme to act on carboxymethyl cellulose and one being quantification of the reducing sugar as the reaction product, and it uses a copper reagent to quantify the reducing sugar. Enzymes that can advantageously be used in the enzymatic treatment step of the present invention include PECTINASE G "AMANO" (Amano Enzyme Inc.) and PECTINASE PL "AMANO" (Amano Enzyme Inc.)

The amount of the enzymatic agent to be used in the enzymatic treatment step of the present invention varies with the pectinase activity of that enzymatic agent but it preferably ranges from 2.4 to 7.5 units, more preferably from 2.4 to 5 units, per 100 mL of mango juice. The enzymatic agent may be directly added to mango juice if it is in a liquid form; alternatively, it may be added after being suspended in water if it is in a powder form; in either case, the enzymatic agent is added to mango juice after its temperature is adjusted to be within the ranges specified below.

Whatever values the other conditions may take, the temperature for the enzymatic treatment can be appropriately set within the range of 30-60°C, preferably within the range of 40-50°C, and more preferably within the range of 42-48°C. Whatever values the other conditions may take, the duration of the enzymatic treatment can be appropriately set within the range of 10-30 minutes, preferably within the range of 15-30 minutes. If the duration of the enzymatic treatment is shorter than 10 minutes, the mango juice as treated may sometimes form a precipitate even if it is depulped; if the duration of the treatment is longer than 30 minutes, the cloudiness of the mango juice will sometimes disappear. The pH for the enzymatic treatment preferably ranges from 3.0 to 6.0 but in most cases the mango juice itself has a pH of 4-5, so it can be subjected to enzymatic treatment without pH adjustment.

Enzymatic treatment is performed to such an extent that upon subsequent depulping, precipitation can be prevented but that the cloudy state of the mango juice will not disappear. This is different from the end point of the enzymatic treatment that is commonly performed to clarify apple juice or grape juice. The inherent purpose of enzymatic treatment is to clarify fruit juice but clarification, or the loss of the cloudy state, is not preferred for the purposes of the present invention. According to the study made by the present inventors, an excessive enzymatic treatment of mango juice yielded a processed product (i.e., after subsequent depulping) that lost its cloudiness and experienced precipitation. In order to perform enzymatic treatment to the desired extent, special attention is preferably paid to the amount of the enzyme to be used, the temperature for the treatment, and the duration of the treatment. A particularly advantageous combination is an enzymatic agent having a pectinase activity of 2.4-7.5 units per 100 mL of mango juice, which is added for enzymatic treatment at 30-60°C for 15-30 minutes, more preferably an enzymatic agent having a pectinase activity of 2.4-5 units per 100 mL of mango juice, which is added for enzymatic treatment at 40-50°C for 15-30 minutes.

The enzymatically treated mango juice thus obtained is heated to deactivate the enzymatic activity derived from the enzymatic agent. Specifically, this deactivation is accomplished by holding the enzymatically treated mango juice at 90°C or a higher temperature, say 100°C, for a period of 15 seconds to several minutes, say, 30 seconds.

### Depulping step:

In the present invention, the enzymatically treated mango juice is further subjected to the depulping step.
The method of depulping mango juice is not particularly limited and any suitable method such as centrifugal separation, filtration, or membrane separation may be employed; centrifugal separation can advantageously be applied as an industrially convenient method. Various types of centrifugal separator can be used, including a centrifugal sedimentation apparatus (division plate-type, decanter-type, tube-type, etc.) and a centrifugal filtration apparatus (basket-type, etc.)

If depulping is to be performed by centrifugal separation, the concentration of mango juice to be supplied to the centrifugal separator may be appropriately set in order to yield the desired form of processed mango juice. More specifically, the mango juice may be directly subjected to centrifugal separation or, alternatively, in view of its high viscosity, the mango juice may be diluted with a solvent such as water in order to increase the separation efficiency. The dilution ratio to be adopted in this case is preferably such that the mango juice to water ratio is within the range of from 1:0.1 to 1:10, more preferably from 1:0.5 to 1:5, by volume.

The processing conditions for centrifugal separation are not particularly limited and can be appropriately determined considering various factors including the type of machine, the centrifugal separation effect (x G), the centrifugal separation time, the centrifugal separation temperature, the fluid supply rate, the state of fruit juice being supplied. To give an example of the centrifugal separation effect (x G), values ranging from 500 (x G) up to 60,000 (x G) can be attained on an industrial scale but values no greater than 20,000 (x G) are preferred as the upper limit. Furthermore, considering the performance of models for large-scale processing, values no greater than 11,000 (x G) are even more preferred. In addition, centrifugal separation temperature ranges from about 0°C to about 60°C, preferably from about 20°C to about 40°C, in consideration of the quality that need be achieved. The centrifugation separation time which depends on the machine used preferably ranges from about one second to about one hour.

Processed mango juice as obtained merely through depulping contains flavor substances characteristic of mango in the water-soluble component, and if they are undesirable for the intended use, the characteristic flavor of mango can be reduced by lowering the water-soluble component as through ultrafiltration.

From the viewpoint of ensuring that fruit juice-containing beverages as produced by adding processed mango juice will not form a precipitate, depulping is preferably performed to such an extent that the processed mango juice to be used as the starting material will not have a pulp content of no more than 20%. Furthermore, if it is particularly important to secure gentleness on the throat, the pulp content is preferably adjusted to 5% or less, more preferably 1% or less, and even more preferably 0.5% or less.

### Processed mango juice:

The processed mango juice as obtained through depulping may be directly drunk as a beverage but, if desired, it may be subjected to additional processing steps such as concentrating and drying. The processed mango juice may be in various forms which include, but are not limited to, liquid, particulate, crystalline, and granular forms; for the production of beverages, the liquid form can advantageously be employed.

The type of beverage according to the present invention is not particularly limited and there may be mentioned non-alcoholic beverages and alcoholic beverages: non-alcoholic beverages include fruit juice-containing beverages (especially fruit juice-containing soft drinks), fruit-mixed juices, sports drinks, nutritional drinks, fruit juice-containing flavored carbonated beverages, fruit juice-based "near-water" drinks, diluted beverages (for household consumption, for sale by vending machines, etc.), and the like; alcoholic beverages include fruit wines, liqueurs, and the like. The fruit juice-containing beverage of the present invention may also contain fruit juice components other than the processed mango juice. The problem with the juice of fruits other than mango is that if one attempts to prevent the occurrence of precipitation by removing the pulp component, the product lacks the desired flavor; however, if the processed mango juice of the present invention is added to such fruit juice, there can be obtained a fruit juice-containing beverage that features the rich flavor of the fruit.

The amount of the processed mango juice of the present invention to be added to the beverage of the present invention can be determined as appropriate for the type of the beverage, the amounts of various ingredients to be incorporated, the desired flavor, cost, etc. on the condition that they are within ranges that provide beverages that impart the outstanding flavor derived from the fruit, that have low viscosity, and that yet are protected against precipitation. If the processed mango juice is used in the form of a concentrate, it can be possible to prepare diluted beverages with a labeling that indicates that the amount of addition of the processed mango juice (as calculated for the amount of addition in the case where it is restored to the concentration in a freshly squeezed state) exceeds 100%. However, the amount of addition of the processed mango juice to various beverages as calculated for the concentration in the freshly squeezed state is preferably from 0.1% to 100%, more preferably from 5% to 50%, if the beverage is non-alcoholic, and preferably in the range of 0.1% to 95%, more preferably from 5% to 30%, if the beverage is alcoholic.

The beverages of the present invention may be placed in various types of container which are typically plastic containers and glass bottles that permit the content to be seen through but the applicable containers are not particularly limited and metal cans (steel and aluminum cans) as well as paper containers can also be employed. Since the present invention prevents precipitation, it can advantageously be applied to beverages that are produced by processes including the step of filling into transparent or semi-transparent containers through which the color of the content that is closely associated with the willingness of consumers to buy can be seen.

The present invention can be combined with various hitherto known methods. Specifically, to the extent that the flavor will not be impaired, the present invention may be combined with methods of adding clarified fruit juices, methods of adding emulsifiers, methods of adding colorings and flavors, or methods of adding thickening agents.

### EXAMPLES

### [Example 1: Evaluation in Processed Mango Juice]

Mango puree (of Colombian species Magdalena River) was hydrated to adjust the sugar content (Brix) to be within the range of 8.5 to 9.0.

To the mango puree with the adjusted sugar content, the enzymatic agents identified in Table 1 were added and enzymatic treatment was conducted for 15 minutes with the temperature held at 45°C. After the enzymatic treatment, the mango puree was depulped by centrifugal separation at 1,200 (x G) for 10 minutes to make four samples of processed mango juice (Sample Nos. 1-4).

The aforementioned mango puree with the adjusted sugar content was not subjected to any enzymatic treatment but simply depulped under the same centrifugal separation conditions as shown above; the resulting processed mango juice was used as a comparative sample.

Sample Nos. 1-4 of processed mango juice and the comparative sample were subjected to measurements of pulp content and turbidity. Check was also made for the presence of a precipitate and the cloudiness immediately after the preparation of the processed mango juice. Specifically, 150 mL of each sample of the processed mango juice was put into a 180-mL transparent glass bottle, which was held in a 20°C thermostatic water tank for 30 minutes; thereafter, visual check was made to see whether a precipitate formed on the bottom of the glass bottle and how cloudy the content appeared.

The bottom of the glass bottle was visually checked for the presence of a precipitate and the result was evaluated on the following 4-point scale: (- -) no precipitate observed; (-) only slightly observed; (+) observed; (++) much observed. The criterion for evaluation of cloudiness was whether the content appeared cloudy.

The results are shown in Table 1. The comparative sample maintained a satisfactorily cloudy appearance but a precipitate was observed on the bottom of the glass bottle. Sample Nos. 1 and 2 maintained a cloudy appearance comparable to that of the comparative sample but no precipitate was observed at all. Sample Nos. 3 and 4 had no observable precipitate but they had lost the cloudy state. It was therefore clear that only Sample Nos. 1 and 2 that were subjected to the treatment with pectinase PL and pectinase G, respectively, and which were subsequently depulped by centrifugal separation were superior processed mango juice that maintained a cloudy state without forming any precipitate.

Separately, particle size distribution was measured in the respective samples of processed mango juice using the laser diffraction particle size analyzer SALD-2000 of Shimadzu Corporation; in Sample Nos. 1-4, most of the particles were not larger than 5 µm but in the comparative sample, particles of 10 µm or larger remained.

**Table 1**

| Sample | Enzymatic agent | Manufacturer | Amount of enzyme (w/v%) | Pectinase activity (units) | Temp. (°C) | Time (min) | Pulp cont. (%) | Turbidity (NTU) | Precip. | Cloudiness |
|---|---|---|---|---|---|---|---|---|---|---|
| Comp. sample | - | - | - | - | - | - | | 3918 | + | Particles of 10 mm or larger remained |
| Sample 1 | Pectinase PL | Amano Enzyme Inc. | 0.005 | 7.5 | 45 | 15 | 0.3 | 2753 | -- | Cloudiness maintained |
| Sample 2 | Pectinase G | Amano Enzyme Inc. | 0.002 | 2.4 | 45 | 15 | 0.3 | 3511 | -- | Cloudiness maintained |
| Sample 3 | Pectinase ST | Kyowakasei Ltd. | 0.002 | 12 | 45 | 15 | 0.2 | 389 | -- | Cloudiness disappeared, no precipitate formed |
| Sample 4 | Sumizyme SPC | Kyowakasei Ltd. | 0.002 | 12 | 45 | 15 | 0.3 | 1016 | -- | Cloudiness disappeared, no precipitate formed |

Pectinase PL: Containing cellulase as well as pectinase; EndoPGase power ≥ 1,500 u/g (pH 3.5); fiber digestive power ≥ 50,000 u/g (pH 4.5); optimum temperature, 60°C for EndoPGase power and 55°C for fiber digestive power; optimum pH, 3.5 for EndoPGase power and 5.0 for fiber digestive power.
Pectinase G: 90.0% pectinase and 10.0% dextrin; glucose-containing fruit juice clarifying power ≥ 200 u/g (JAC method); EndoPGase power ≥ 1,200 u/g (pH 3.2)
Sumizyme SPC: having cellulase activity as well as pectinase activity; optimum temperature, 40-60°C; optimum pH, 3.0-5.5; addition at 0.01-0.1% is recommended (for efficient clarification and squeezing of fruit juice of higher pulp content).
Pectinase ST: having cellulase, protease and amylase activities as well as pectinase activity; optimum temperature, 40-60°C; optimum pH, 3.0-5.5; addition at 0.01-0.1% is recommended (for use in the clarification of immature fruit juice and in the clarification of a wide variety of fruit juices).

### [Example 2: Evaluation in Fruit Wine]

Fruit wine was prepared from the processed mango juice obtained in Example 1 and check was made for cloudiness and for the presence of a precipitate.

A plurality of ingredients were mixed in accordance with the recipes shown in Table 2 to prepare two kinds of fruit wine, Comparative Product 1 and Trial Product 1. Referring to Table 1, the "depulped, processed mango juice" is equivalent to the comparative sample prepared in Example 1 and the "processed mango juice" is equivalent to Sample 2 prepared in Example 1. The prepared fruit wine was heat-sterilized at 85°C for 10 seconds and then cooled to 5°C; after centrifugal separation (batch treatment at 7,500 (x G) for 10 minutes), the supernatant was filtered through a strainer of 200 mesh and 180 mL of the filtrate was filled into a 180-mL glass bottle. The bottled wine was sterilized at 60°C for 7 minutes.

**Table 2**

| Ingredients | Comparative Product 1 | Trial Product 1 |
|---|---|---|
| Grape wine | 340ml | 340ml |
| Processed mango juice | - | 220ml |
| Depulped, processed mango juice | 220ml | - |
| Cloudy peach juice | 0ml | 0ml |
| Clear grape juice | 55ml | 55ml |
| Clear lemon juice | 0.8ml | 0.8ml |
| Clear grapefruit juice | 10ml | 10ml |
| Superfine sugar | 12ml | 12ml |
| Replenishing water | 362.2ml | 362.2ml |
| Total | 1L | 1L |

These two samples of fruit wine (Comparative Product 1 and Trial Product 1) were subjected to a storage test. Specifically, the samples were stored in thermostatic vessels set to 5°C and 50°C. The samples stored at 5°C were equivalent to controls and those stored at 50°C were equivalent to samples under accelerated test. These samples were taken out of the thermostatic vessels at given time intervals and after being left to cool to room temperature, visual check was made to see whether a precipitate formed on the bottom of the glass bottle and how cloudy the content appeared.

These samples of fruit wine were visually checked for cloudiness and for the presence of a precipitate. Cloudiness was evaluated on a relative scale to see whether, in comparison with the control which was stored at 5°C, the same sample stored at 50°C had a difference in cloudiness or maintained the same level of cloudiness. Specifically, the following 4-point scale was used: (++) no difference in cloudiness was observed, or the control's cloudiness was maintained in the 50°C sample; (+) some difference in cloudiness was observed, or the control's cloudiness was maintained but looked somewhat thin in the 50°C sample; (-) a distinct difference in cloudiness was observed, or the control's cloudiness appeared distinctly thin in the 50°C sample; (- -) no longer cloudy in the 50°C sample. Check for the presence of a precipitate was made on an absolute scale to see whether a precipitate had formed on the bottom of the glass bottle containing the sample stored at 50°C. Specifically, the result was evaluated on the following 4-point scale: (- -) no precipitate observed; (-) only slightly observed; (+) observed; (++) much observed.

The samples were also evaluated for their commercial value. The commercial value of the product of the present invention will be greatly reduced if its cloudiness deteriorates or a precipitate is observed. Therefore, when the cloudiness was found to be (- -) or (-) or, alternatively, when the precipitate was found to be (++) or (+), the product was rated X (having no commercial value). On the other hand, when the precipitate was found to be (-- ) or (-) and the cloudiness was found to be (++) or (+), the product was rated ○ (having commercial value).

The obtained results are shown in Table 3. Immediately after its production, Comparative Product 1 was cloudy and had no observable precipitate; however, upon storage at 50°C for 3 days, a precipitate formed, depriving Comparative Product 1 of its commercial value. On the other hand, even after storage at 50°C for 12 days, Trial Product 1 substantially maintained the same level of cloudiness as was observed immediately after its production and only a small amount of precipitate had formed. It was therefore clear that the processed mango juice of the present invention, even when it was used as an ingredient of fruit wine, had superior quality, maintaining the initial cloudiness for a prolonged period and yet forming only a small amount of precipitate.

**Table 3**

| | | Immediately after production | 3 days | 6 days | 10 days | 12 days |
|---|---|---|---|---|---|---|
| Comparative product 1 | Cloudiness | ++ | ++ | ++ | + | + |
| | Precipitate | -- | + | ++ | ++ | ++ |
| | Commercial value | ○ | × | × | × | × |
| Trial Product 1 | Cloudiness | ++ | ++ | ++ | ++ | + |
| | Precipitate | -- | -- | -- | - | - |
| | Commercial value | ○ | ○ | ○ | ○ | ○ |

### [Example 3: Evaluation in Non-alcoholic Beverage]

Non-alcoholic beverage was prepared from the processed mango juice obtained in Example 1 and check was made for cloudiness and for the presence of a precipitate.

A plurality of ingredients were mixed in accordance with the recipes shown in Table 4 to prepare two kinds of non-alcoholic beverage, Comparative Product 2 and Trial Product 2. Referring to Table 4, the "depulped, processed mango juice" is equivalent to the comparative sample prepared in Example 1 and the "processed mango juice" is equivalent to Sample 2 prepared in Example 1. The prepared non-alcoholic beverage was heat-sterilized at 85°C for 10 seconds and then cooled to 5°C; after centrifugal separation (batch treatment at 7,500 (x G) for 10 minutes), the supernatant was filtered through a strainer of 200 mesh and 180 mL of the filtrate was filled into a 180-mL glass bottle. The bottled non-alcoholic beverage was sterilized at 80°C for 30 minutes.

**Table 4**

| Ingredients | Comparative Product 2 | Trial Product 2 |
|---|---|---|
| Processed mango juice | - | 350ml |
| Depulped, processed mango juice | 350ml | - |
| Clear grape juice | 87ml | 87ml |
| Clear lemon juice | 2.0ml | 2.0ml |
| Clear grapefruit juice | 17ml | 17ml |
| Replenishing water | 544ml | 544ml |
| Total | 1L | 1L |

These two samples of non-alcoholic beverage (Comparative Product 2 and Trial Product 2) were subjected to a storage test as in Example 2; in addition, they were visually checked for cloudiness and for the presence of a precipitate, and also evaluated for their commercial value. The methods of evaluation and the criteria for judgment were also in accordance with Example 2.

Immediately after its production, Comparative Product 2 was cloudy and had no observable precipitate; however, upon storage at 50°C for 3 days, a precipitate formed, depriving Comparative Product 2 of its commercial value. On the other hand, even after storage at 50°C for 12 days, Trial Product 2 substantially maintained the same level of cloudiness as was observed immediately after its production and only a small amount of precipitate had formed. It was therefore clear that the processed mango juice of the present invention, even when it was used to make a non-alcoholic beverage, had superior quality, maintaining the initial cloudiness for a prolonged period and yet forming only a small amount of precipitate.

## Claims

1. A process for producing processed mango juice having a reduced pulp content comprising the steps of:
treating, with an enzymatic agent, mango juice that has a turbidity of at least 3,700 upon centrifugal separation with a centrifugal effect of 1,200 (x G) for 10 minutes; and
depulping the enzymatically treated mango juice to yield processed mango juice having a pulp content of no more than 20% (v/v) and a turbidity of at least 1,400 NTU.

2. A process for producing processed mango juice having a reduced pulp content comprising the steps of:
treating, with pectinase, mango juice obtained from mango fruit selected from among the species Haden, Tomy Atkins, Torbet, and Magdalena River, the pectinase treatment being such that an enzymatic agent containing pectinase is used at a pH of 3.0-6.0 and 30-60°C for 15-30 minutes to give a pectinase activity of 2.4-7.5 units per 100 mL of the mango juice; and
depulping the pectinase-treated mango juice to yield processed mango juice having a pulp content of no more than 20% (v/v) and a turbidity of at least 1400 NTU.

3. The process according to claim 2, wherein the enzymatic agent has a cellulase activity value which is no more than 60 times its pectinase activity value (units/mL) as the reference.

4. The process according to any one of 1 to 3, wherein the depulping step is performed by centrifugal separation.

5. The process according to claim 4, wherein the centrifugal effect as achieved by centrifugal separation is 20,000-500 (x G).

6. A process for producing a beverage containing processed mango juice, which comprises the steps of:
obtaining the processed mango juice according to any one of claims 1 to 5; and
adding the obtained processed mango juice.

7. The process according to claim 6, wherein the processed mango juice is added in an amount which is 0.1-99.9% as calculated for the concentration in a freshly squeezed state.

8. The process according to claim 6 or 7, wherein the beverage is an alcoholic beverage.

9. The process according to claim 6 or 7, wherein the beverage is a non-alcoholic beverage.
